# EUROPÄISCHE PATENTSCHRIFT

(11) **EP 1 249 476 B1**
(45) Veröffentlichungstag und Bekanntmachung des Hinweises auf die Patenterteilung: **30.05.2007**
(21) Anmeldenummer: 02090135.1
(22) Anmeldetag: 06.04.2002
(51) Int. Cl.: C09D 5/16

(54) **Biozidfreie Antifouling-Beschichtung**
Biocidefree antifouling coating
Revêtement anti-salissure exempt de biocide

(30) Priorität: 10.04.2001 DE 10117945
(43) Veröffentlichungstag der Anmeldung: 16.10.2002
(73) Patentinhaber: Stiftung Alfred-Wegener-Institut für Polar- und Meeresforschung, 27568 Bremerhaven (DE)
(72) Erfinder: Baum, Christof, 27632 Dorum (DE); Meyer, Wilfried Prof., 30539 Hannover (DE); Fleischer, Lutz-Günther Prof., 10369 Berlin (DE); Siebers, Dietrich Prof., 25421 Pinneberg (DE)

(56) Entgegenhaltungen:
- WO-A-00/58410
- WO-A-96/04123

## Beschreibung

Die Erfindung bezieht sich auf eine biozidfreie Antifouling-Beschichtung mit umweltneutralen Selbstreinigungs- und hydrodynamischen Oberflächeneigenschaften für umströmte Unterwasserflächen zur Vermeidung von Ablagerungen organischer Foulingstoffe mit einer Reinigungskomponente und einer zugehörigen Fixationskomponente, deren Parameterwerte in Abhängigkeit von den auftretenden Foulingstoffen und Umströmungsverhältnissen vorgegeben sind.

In aquatischen Lebensräumen kommt es darauf an, Oberflächen vor klebrigen Biopolymeren zu schützen, die einen Biofoulingprozess einleiten. Unter Biofouling versteht man die Ablagerung lebender Organismen auf Materialoberflächen in wässriger Umgebung, die deren physikalische Oberflächeneigenschaften negativ beeinflussen. Im maritimen Bereich unterscheidet man drei Arten von Bewuchs : Tiere, beispielsweise Muscheln und Seepocken; Algen, beispielsweise Grün- und Braunalgen, und Mikroorganismen, die sich durch ihren bevorzugten Lebensraum charakterisieren. Jeder Foulingprozess im Wasser startet mit der Anheftung von organischen Molekülen an einer Oberfläche. Die Verfestigung ermöglicht die weitere Ansiedlung von Bakterien, Diatomeen, Muscheln und Krebsen etc.. In mariner Umgebung erfährt jede Oberfläche Biofouling, welches somit eines der bedeutendsten Probleme in der Marinetechnologie darstellt. Spezielle Oberflächenbeschichtungen, sogenannte Antifouling-Beschichtungen", sollen den Bewuchs an Schiffsrümpfen, Seewasserkonstruktionen, wie Ölplattformen, Hafenanlagen und Rohren, sowie an anderen künstlichen Unterwasserstrukturen verhindern. Bekannte Antifouling-Beschichtungen beruhen sowohl auf Formen der mechanischen Reinigung als auch auf dem Entlassen von toxischen Bioziden aus Matrix-Beschichtungen, im allgemeinen Kunststoff, oder auf Kombinationen von beidem. Bei der mechanischen Reinigung werden Antifouling-Beschichtungen mit geringen Oberflächenspannungen eingesetzt, die durch die Verwendung von beispielsweise Teflon oder Silikon in der Beschichtung erreicht werden. Die stark rutschigen" Oberflächen verhindern die Anheftung von Foulingstoffen. Außerdem unterscheidet man zwischen unlöslichen und löslichen Beschichtungen. Die unlöslichen Antifouling-Beschichtungen werden auch als "Kontakttyp" bezeichnet und weisen eine hohe Abriebfestigkeit auf. Lösliche Antifouling-Beschichtungen sind selbsterodierend und werden von strömendem Wasser langsam abgetragen, so dass sich ihre Schichtstärke verringert. Je nach Kunststoffbasis werden die Biozide ausgespült ("depletion type"), an der erodierten Oberfläche präsentiert ("hydration type") oder im Wasser gespalten ("hydrolyse type").

Bekannte Antifouling-Beschichtungen verhindern durch ihre Biozide, die wie Schädlingsbekämpfungsmittel wirken, die Besiedlungsphase des Foulingprozesses. Bei den Bioziden unterscheidet man die metallorganischen Biozide, wie beispielsweise die Breitbandgifte Arsen, Kupfer und Tributylzinn, und die natürlichen Biozide, mit denen viele marine Organismen ihre Oberfläche gegen Biofouling schützen. Da schon geringe Konzentrationen der Breitspektrum-Gifte langfristige Umweltschäden verursachen, ist den natürlichen Bioziden der Vorzug zu geben. Viele marine Organismen produzieren natürliche Biozide, die als biogene Wirkstoffe antibakteriell, antialgalen, antifungisch und makrofoulingverhindemd wirken können. Jedoch wächst aufgrund der strengeren Gesetzesregelung im Rahmen der sogenannten "Biozidrichtlinie" der Bedarf an nicht-toxischen Bewuchsschutzmethoden.

Aus der **DE-OS 198 36 076** ist eine biozidfreie Antifouling-Beschichtung bekannt, von der die Erfindung als nächstliegendem Stand der Technik ausgeht. Hierbei handelt es sich um eine biomimetische, das heißt auf der Nachahmung natürlicher Vorbilder beruhende Oberflächenbeschichtung mit zwei hauptsächlichen Komponenten, die umweltneutrale Selbstreinigungseigenschaften aufweisen und für eine hydrodynamische Oberfläche mit geringem Reibungswiderstand sorgen. Der Antifouling-Effekt beruht dabei auf der Bildung eines oberflächlichen Gels. Ein Gelbildner als Reinigungskomponente wird anstelle von umweltschädlichen Bioziden ohne Verwendung von artfremden Trägersubstanzen eingesetzt. Die Bereitstellung des Gelbildners wird dabei von einer abbaubaren Gelmatrix ("self-polishing-Matrix") als Fixationskomponente übernommen, die mit dem Gelbildner in einer Suspension homogen vermischt ist. Beide Komponenten werden in einem gemeinsamen Arbeitsgang auf die zu schützende Unterwasserfläche aufgebracht, dabei ist die flächige Anhaftung der turbulenten Umströmung ausgesetzt. Die Wirkung der Reinigungskomponente, die durch die Abbaubarkeit der Fixationskomponente ständig auf der Unterwasserfläche zur Verfügung gestellt wird, entfaltet sich vor allem bei Kontakt mit den Schleimstoffen des Wassers oder des Bewuchses. Die Foulingstoffe des Wassers und der Foulingorganismen bilden dann ein Gel auf der Antifouling-Beschichtung, das jedoch bei turbulenter Umströmung nicht standfest ist. Durch das Abwaschen kommt es zu einem Stoffverlust von beiden Komponenten, durch den die Beschichtung langsam aufgebraucht wird, sodass eine periodische Erneuerung erforderlich ist. Der Stoffverlust ist dabei umso größer, je stärker die auftretenden Wasserströmungen sind.

Alle vorstehenden Ausführungen betreffen den Foulingprozess in zweiphasigen Systemen "Festkörper-Wasser". Aber auch in dreiphasigen Systemen "Festkörper-Luft-Wasser", also bei der Luft ausgesetzten Oberflächen mit entsprechenden Oberflächenspannungen, treten Verunreinigungsprobleme bis hin zu einer möglichen Algenbildung auf. Hier jedoch liegen völlig andere Bedingungen für eine Selbstreinigung vor. Die erfolgreiche Selbstreinigung solcher Oberflächen aufgrund einer topologischen Oberflächenmodifizierung hat in der letzten Zeit durch die Ausdeutung des "Lotus-Effekts" (nach Barthlott und Neinhuis : "Purity of the sacred lotus, or escape from contamination in biological surfaces", Planta (1997) 202:1-8) eine Reihe technischer Entwicklungen in Gang gesetzt. Dabei haben sich hydrophobe, mikroraue Strukturen in um-Bereich, wie sie bei an Luft lebenden Pflanzen und Insekten zu finden sind, als ausreichend rau erwiesen, um Selbstreinigung an der Dreiphasengrenze zu erzeugen.

Aus der **WO 9604123** sind künstlich mikrostrukturierte Oberflächen mit Erhebungen zwischen 5 µm und 100 µm und Abständen zwischen 5 µm und 200 µm bekannt, bei denen die Erhebungen aus hydrophoben Materialien bestehen oder mit solchen beschichtet sind. Dabei können die Mikrostrukturierung und die Hydrophobierung in unterschiedlichen Arbeitsgängen erfolgen. Durch die Mikrostrukturierung wird eine Oberfläche mit vereinzelten Kontaktpunkten erzeugt, die vom Wasser nur schwer benetzbar ist. Auftreffendes Wasser formiert sich daher zu Tropfen, die von einer geneigten Oberfläche leicht abrollen und dabei vorhandene Schmutzpartikel binden können. Die Hydrophobierung, die durch Ausbildung geringer Oberflächenenergien gekennzeichnet ist, unterstützt die Tropfenbildung noch. Hergestellt werden können derartige mikrostrukturierte Oberflächen entweder mittels hydrophober Materialien, die selbst beim Auftragen die Strukturierung erzeugen oder nachträglich bearbeitet werden, oder durch Strukturieren einer Oberfläche mit einer anschließenden Beschichtung mit einem hydrophoben Material. Dabei können die Erhebungen dauerhaft oder auch ablösbar sein, wie es bei dem Verfahren gemäß der WO 00/58410 zur Herstellung von selbstreinigenden Oberflächen mit Erhebungen zwischen 0,1 µm und 100 µm und Abständen zwischen 0,1 µm bis 200 µm der Fall ist (Autowachse). Aus der WO 00/58415 ist zudem eine hydrophobe Vorrichtung mit demselben Maßbereich für die Strukturierung bekannt, die dem verlustfreien Transport oder Entleerung von hydrophilen, insbesondere auch wässrigen Flüssigkeiten dient. Auch hier tritt der Zustand einer dauerhaften Benetzung mit entsprechenden Verschmutzungserscheinungen nicht auf. Weiterhin sind aus der **DE-OS 198 037 87** mikrostrukturierte Oberflächen mit Erhebungen zwischen 50 nm und 10 µm bekannt, die Abstände im selben Maßbereich zueinander und Oberflächenenergien von 10 mN/m bis 20 mN/m aufweisen.

Ziel der genannten Anordnungen und Verfahren ist es, möglichst "glatte" Oberflächen im Sinne einer erschwerten Schmutzanheftung zu erzielen. Wohingegen eine Berücksichtigung der Strömungsverhältnisse im Wasser, aufgrund derer für Unterwasserflächen eine hydrodynamische Glätte möglichst hoher Effizienz und damit ein möglichst geringer Reibungswiderstand erreicht werden muss, wegen der grundsätzlich anderen Bedingungen im Dreiphasensystem außer Betracht bleibt. Eine dauerhafte Wasserbenetzung ist hier nicht vorgesehen und würde auch nicht den gewünschten Effekt des reinigenden Abperlens von Wassertropfen ergeben.

Demgegenüber liegt der Erfindung für den Foulingschutz bei umströmten Unterwasserflächen die **Aufgabe** zugrunde, ausgehend von einer biozidfreien Antifouling-Beschichtung der eingangs genannten Art eine gegenüber dem oben beschriebenen nächstliegenden Stand der Technik verbesserte Antifouling-Beschichtung anzugeben, die eine hohe hydrodynamische Effizienz und eine gute homogene und dauerhafte Flächenhaftung auf der zu reinigenden Unterwasserfläche auch bei stärkeren Umströmungen aufweist. Dabei soll die Beschichtung einfach an die jeweils herrschenden Umgebungsbedingungen anpassbar, mit bekannten Verfahren verarbeitbar und preisgünstig in ihren Komponenten sein.

Diese Aufgabe wird erfindungsgemäß mit einer Antifouling-Beschichtung gemäß Anspruch 1 gelöst. Vorteilhafte Ausführungformen der Erfindung sind in den Untransprüchen beschrieben.

Das erfindungsgemäße duale Aufbauprinzip der kompositen Form aus einer nanoskaligen porigen Oberfläche als Fixationskomponente und einem porenfüllenden Material als Reinigungskomponente führt zu einer hydrodynamisch sehr glatten Oberfläche und zu einer wesentlichen Verbesserung der Haftfähigkeit der Reinigungskomponente an der reinzuhaltenden Unterwasserfläche. Dabei ist nicht zu verkennen, dass auch die Fixationskomponente einen Reinigungsbeitrag leistet, da auf dem von ihr gebildeten Porenrelief nur unregelmäßig verteilte Haftpunkte für Schmutzpartikel auf der wasserumspülten Oberfläche entstehen. Der Grund für den zusätzlichen Reinigungseffekt ist darin zu sehen, dass an den undulierenden Kontaktlinien nur instabile Kontaktwinkel auftreten können, durch die instabiles Fließen erzeugt werden kann. Partikulären, klebrigen Biopolymeren wird dadurch die Bindung an das anheftungsstellenarme Oberflächenrelief erschwert. Kleineren gelösten, adhäsiven Makromolekülen bleibt hingegen durch die Reinigungskomponente in Form des porenausfüllenden Reinigungsfilms der Zutritt in die Poren verwehrt, sodass hier ebenfalls keine Anlagerung stattfinden kann.

Auch die Reinigungskomponente erfüllt eine zusätzliche Funktion. Durch das randvolle Ausfüllen der Poren wird das nanoskalige Relief in seiner Wirktiefe noch weiter verringert, sodass gleichsam nur noch die festen Begrenzungslinien der Poren eine flache, punktförmige Strukturierung mit einer gegen Null gehenden Tiefe bilden. Dadurch wird eine sehr gute, hydrodynamisch glatte Oberfläche geschaffen, über der sich eine stabile laminare Strömung ausbilden kann. Durch diese wird der Reibungswiderstand der Unterwasserfläche entscheidend verringert. Dabei sind die Geometrien der porenformenden und der porenfüllenden Komponenten an die auftretenden Foulingstoffe und an die Geschwindigkeit der Umströmung angepasst. Foulingstoffpartikel, die die laminare Strömungsschicht beim Anheftungsversuch überragen, werden von der darüber liegenden turbulenten Strömung erfasst und abgeschert, sodass auch für größere Partikel keine Anheftung stattfinden kann.

Zusammenfassend gesehen wird von der erfindungsgemäßen Beschichtung wirkungsvoll das gesamte auftretende Spektrum verschiedener Foulingstoffarten und -größen erfasst, die beschichtete Oberfläche zeigt optimale, umweltneutrale Selbstreinigungseigenschaften. Die Reinigungsphase liegt bereits in der Anfangsphase auftretenden Biofoulings. Dabei trägt die erfindungsgemäße Antifouling-Beschichtung dem Umstand Rechnung, dass in einem zweiphasigen System andere Bedingungen vorliegen als für die Selbstreinigung in dreiphasigen Systemen. In aquatischen Lebensräumen kommt es vor allem darauf an, Oberflächen vor den klebrigen Biopolymeren zu schützen, die den Biofoulingprozess einleiten und die physikalischen Oberflächeneigenschaften negativ beeinflussen. Die bionische Ausdeutung der durch eine lange Evolution im Meer optimierten biologischen Vorlage in Form der Delphinhaut mit einem nanoskaligen Porenrelief und einem porenfüllenden und flächenüberziehenden Reinigungsfilm ermöglicht erstmals die Übertragung des Lotus-Effektes" auf Unterwasserflächen. Aus dieser Erkenntnis heraus konnten die Bedingungen für die erfindungsgemäße Antifouling-Beschichtung als duales Kompositsystem entwickelt werden.

Die erfindungsgemäße Antifouling-Beschichtung in ihrer kompositen Form kann bei allen wasserbenetzten Oberflächen eingesetzt werden. Hierbei kann es sich beispielsweise um Unterwasserkonstruktionen, Schiffsrümpfe, Sensoren und Verrohrungen handeln. Dabei wird die Beschichtung in zwei voneinander getrennten Arbeitsschritten, zunächst die Fixierungskomponente, dann die Reinigungskomponente, aufgebracht. Die Verarbeitungsweisen erfolgen mit bekannten Verfahren. Weiterhin kann die Beschichtung durch eine geeignete Wahl der Materialien und der Werteausprägungen ihrer charakteristischen Eigenschaften, beispielsweise Porengröße und -dichte, auf die Größe der zu erwartenden klebrigen Foulingpartikel und die zu erwartende Umströmung der Unterwasserfläche optimal angepasst werden. Dabei kann nach einer Fortführung der erfindungsgemäßen Antifouling-Beschichtung die Porengröße in der porenformenden Komponente zwischen 0,1 µm² und 0,45 µm² liegen, wobei insbesondere ein sehr hoher Anteil der Poren eine Porengröße von 0,2 µm² aufweist. Des Weiteren ist es vorteilhaft, wenn die Porendichte einen relativen Oberflächenanteil der Poren zwischen 20 % und 90 % ausmacht und die Porenstege den flächigen Reinigungsfilm mit einer Höhe im Bereich von 10 nm bis 20 nm durchstoßen. Diese Werte entsprechen in etwa den Verhältnissen bei aquatischer Naturhaut und decken somit ein großes Spektrum bekämpfbarer Foulingstoffe ab. Es handelt sich aber hierbei lediglich um Richtwerte für die Parameter, die im Einzelfall entsprechend anzupassen sind.

Für die dauerhafte Wirksamkeit der erfindungsgemäßen Antifouling-Beschichtung ist deren Haftfähigkeit an der zu schützenden Unterwasserfläche von ausschlaggebender Bedeutung. Gemäß einer nächsten Weiterbildung der Beschichtung nach der Erfindung kann deshalb die porenformende Komponente hydrophil sein, wobei insbesondere der Grad der Hydrophilie an die Eigenschaften der Unterwasserfläche angepasst ist. Aufgrund der von der porenformenden Komponente ausgebildeten Porenstruktur mit nur unregelmäßig verteilten Haftpunkten senken auch hierfür eingesetzte hydrophile Materialien die Oberflächenspannung genügend herab. Von Vorteil bei der Verwendung von hydrophilen porenformenden Materialien ist demgegenüber eine zumeist entscheidend erleichterte Untergrundhaftung. Weiterhin kann die porenformende Komponente einen selbstabschleifenden Binder aufweisen, wobei dieser insbesondere aus einem Harz ohne toxische lösliche Antifouling-Substanzen bestehen kann. Durch diese Maßnahme (vgl. **EP-OS 101 66 81**) wird eine zusätzliche Reinigung der Beschichtungsoberfläche durch eine makroskopische Verjüngung ermöglicht. In biomimetischer Analogie stellt dieser Vorgang den Prozess der Hautabschuppung dar. Bei einem Abtrag der porenformenden Komponente ist jedoch eine periodische Erneuerung der Beschichtung erforderlich.

Diese kann weitgehend umgangen werden, wenn gemäß einer nächsten Erfindungsfortführung die porenformende Komponente aus demselben Material wie die reinzuhaltende Unterwasserfläche besteht. Insbesondere bietet sich dabei vorteilhaft an, dass die Poren in der porenformenden Komponente durch Materialumformung oder -abtrag geformt sind. Neben der Möglichkeit, dass ein zusätzlicher Auftrag identischen Materials erfolgt, besteht bei der Erfindung auch die Möglichkeit, die Unterwasserfläche direkt als porenformende Komponente zu verwenden. Dies erscheint insbesondere sinnvoll bei kleineren Unterwasserflächen, beispielsweise bei relativ kleinen Sensoroberflächen. Dadurch ist eine maximale Haftungssicherheit gegeben, außerdem entfällt das getrennte Aufbringen der Fixationskomponente, ein Arbeitsgang zur Porenbildung kommt jedoch hinzu. Die Poren können dann in die Materialoberfläche beispielsweise durch Ätzung, Abguss oder Besputterung eingebracht werden. Gemäß einer anderen Fortführung nach der Erfindung kann auch vorteilhaft vorgesehen sein, dass die porenformende Komponente in Form von nanofeinen Kunststofffasem durch Elektro-Coating auf die Unterwasserfläche aufgelagert wird. Hierbei handelt es sich um ein einfaches, gut beherrschtes Verfahren mit hervorragenden Haftungseigenschaften der Kunststofffasem auf dem Untergrund, mit dem ein unregelmäßiges nanoskalierten Porenrelief einfach und umweltschonend herstellbar ist.

Zu den Aufgaben der porenfüllenden Reinigungskomponente gehört neben der Ausbildung einer glatten Oberfläche hoher dynamischer Effizienz die Abwehr der klebrigen Foulingstoffe. Hierfür können verschiedene Prinzipien zum Einsatz kommen. Zum einen kann gemäß einer anderen Weiterbildung nach der Erfindung vorgesehen sein, dass die porenfüllende Komponente als löslicher Gelbildner ausgebildet ist. Hierbei wird bei einer Anlagerung von Foulingstoffen ein sekundäres labiles Gel gebildet, das von der Wasserströmung abgeschert wird (vgl. **DE-OS 198 36 076**). Da ein löslicher Gelbildner, der wiederum in einer Gelmatrix zu seiner Bereitstellung eingebettet sein kann, mit der Zeit aufgebraucht wird, ist hier eine periodische Erneuerung des Auftrags erforderlich. Zum anderen kann gemäß einer weiteren Erfindungsausgestaltung vorgesehen sein, dass die porenfüllende Komponente hydrophobe Eigenschaften aufweist, wobei insbesondere der Grad der Hydrophobie an den zu erwartenden Ablagerungsgrad durch die Foulingstoffe angepasst ist. Durch den wasserabstoßenden Charakter des porenfüllenden Materials werden adhäsive Biopolymere abgestoßen. Dabei richtet sich der Grad der Hydrophobie nach deren Klebeigenschaften und auch nach anderen Randbedingungen, wie beispielsweise der Chemikalienbeständigkeit. Ziel ist in dieser Ausführung das Erreichen eines möglichst großen hydrophoben Gefälles zwischen der Reinigungskomponente und der Fixationskomponente.

Gemäß weiterer Ausbildungsformen der Antifouling-Beschichtung nach der Erfindung kann die porenfüllende Komponente als Polymerlösung oder als Partikel-Suspension oder - Emulsion, hier insbesondere auf der Basis von Silika, dessen Hydrophilie und Hydrophobie durch einen Gehalt an Aluminium variiert werden kann, ausgebildet sein. Die porenfüllende Komponente als Partikel-Suspension oder Emulsion kann beispielsweise auf der Basis von Silikon (wie die Aminofluids der GE Bayer Silicones), Silikon Nanopartikeln (**US 5695617**), kolloidem Silica (wie Ludox^{®} der Fa. GraceDavision), Mineralien (Titandioxid) oder Fluorkohlenwasserstoffe (Teflon^{®}) aufgebaut sein. Besonders sinnvoll erscheint die Entwicklung der porenfüllenden Komponente auf Basis von Silika, dessen Hydrophilie und Hydrophobie durch den Gehalt an Aluminium variiert werden kann (Zeolithe^{®}). Oberflächenmodifizierungen der Silikapartikel (z.B. durch Verknüpfung mit Silanen, Enzymen, Wachsen) sind möglich. Im Meerwasserbereich ist Silika - gesteinsbildend - schon durch Kieselalgen vorhanden. Dadurch stellt der Eintrag von Silika eine umweltneutrale anthropogene Maßnahme dar.

In der **Figur** ist die erfindungsgemäße Antifouling-Beschichtung in einem schematischen Querschnitt zur weiteren Veranschaulichung der Erfindung dargestellt.

Eine von Foulingstoffen mit größeren Partikeln **FP** und klebrigen Biopolymeren **BP** freizuhaltende Unterwasserfläche **SMA** wird von Wasser turbulent umströmt. Auf ihrer Oberseite ist die Unterwasserfläche **SMA** mit einer Antifouling-Beschichtung **AF** in Form eines dualen Kompositsystems **CS** mit einer Fixationskomponente **FC** und einer Reinigungskomponente **PC** beschichtet. Die Fixationskomponente **FC** ist als porenformende Komponente **PFO** und die Reinigungskomponente **PC** als porenfüllende Komponente **PFI** ausgebildet. Von der porenformenden Komponente **PFO** wird ein nanoskaliges Relief **NR** aus sich überlappenden Poren **PO** mit Porentiefen von beispielsweise 500 nm oder auch mehr gebildet. Das nanoskalige Relief **NR** weist im gewählten Ausführungsbeispiel insbesondere eine mittlere Porengröße von 0,2 µm² und eine mittlere Porendichte von 70 % der zu schützenden Oberseite der Unterwasserfläche **SMA** auf.

Die porenfüllende Komponente **PFI** bildet über dem nanoskaligen Porenrelief **NR** einen Reinigungsfilm **PL,** der alle Poren **PO** bis zur Oberkante auffüllt und damit eine hydrodynamisch glatte Oberfläche erzeugt. Durch den dadurch herrschenden niedrigen Reibungswiderstand bildet sich eine laminare Strömung **LS** oberhalb der umströmten Unterwasserfläche **SMA** aus, die beispielsweise bei bewegten Schiffsrümpfen von besonderem Vorteil ist. Von der porenformenden Komponente **PFO** ist an der Oberfläche des Reinigungsfilms **PL** nur ein unregelmäßiges Muster aus einzelnen Stegpunkten **PP** von Porenstegen **PW** mit einer Höhe zwischen ungefähr 10 nm und 20 nm sichtbar. Damit ergibt sich für angreifende größere Partikel **FP** ein nanoskaliges Relief **NR** mit Steghöhen von nur einigen nm und nur geringen Anheftungsmöglichkeiten (im Gegensatz dazu liegt beim Lotuseffekt in Dreiphasensystemen ein "Mikrorelief" vor). Wenn die größeren Partikel **FP** dazu noch bis in die turbulente Strömung **TS** hineinreichen, die sich oberhalb der laminaren Strömung **LS** ausbildet, werden sie ohne Weiteres von der turbulenten Strömung **TS** abgeschert. Die kleineren klebrigen Biopolymere **BP** hingegen können sich auch zwischen den Porenstegen **PW** in den Poren **PO** nicht ablagern, da die porenfüllende Komponente **PFI** im gewählten Ausführungsbeispiel hydrophobe Eigenschaften aufweist und damit die Biopolymermoleküle **BP** abstößt.

Durch die Kombination aller genannten Maßnahmen kann mit der erfindungsgemäßen Antifouling-Beschichtung **AF** in dualem Kompositaufbau **CS** wirksam jeder Antifouling-Prozess auf umströmten Unterwasserflächen **SMA** jeder Art wirksam in besonders umweltverträglicher Weise verhindert werden.

Als konkrete **Ausführungsbeispiele** für die erfindungsgemäße Antifouling-Beschichtung als duales Kompositsystem können angegeben werden :

### 1. Komposite polymere Matrix ohne Self-polishing-Effekt:

50 Anteile des biologisch abbaubaren "Ecoflex" F BX 7011 (Firma BASF) werden zusammen mit 1 Anteil der pyrogenen Silica Nanopartikel "Aerosil 200" (Firma Degussa) mit einer Korngrößenverteilung zwischen 10 nm und 400 nm und 2,5 Anteilen des Gelpermeationsharzes "Toyopearl" HW-75F (Firma Tosoh Haas), dessen ca. 45 µm große Perlen Poren zwischen 20 und 200 nm aufweisen, auf 190 °C unter Rühren erwärmt. Die erwärmte Mischung wird auf vorgeheizte phosphatierte Seewasseraluminiumplatten aufgerackelt und für 20 Minuten auf 200 °C aufgeheizt, bis eine einheitliche Fläche entstanden ist. Bei dieser Anwendung dient "Toyopearl" als porenformende Substanz und "Aerosil" als füllende Substanz. "Ecoflex", das in die Poren der Perlen eindringt, aber auch die Silica Nanopartikel "Aerosil 200", umfließt, erfüllt beide Funktionen.

### 2. Komposite polymere Matrix mit Self-polishing-Effekt A:

50 Anteile einer porösen Matrix (beispielsweise "Toyopearl", ein Acrylat-Dextran Copolymer, oder "Amberlite", ein ionenaustauschendes derivatisiertes Acrylat mit 45 µm bis 100 µm großen Perlen und Poren zwischen 20 nm und 200 nm) werden mit 4 Anteilen eines Copolymers aus Methylacrylat und

Butylacrylat "PLEX 4885 F" mit einer Komgröße von 1 µm bis 2 µm (Firma Röhm und Haas) vermischt und wahlweise mit 1 bis10 Anteilen der pyrogenen Silica Nanopartikel "Aerosil 200 (hydrophil)" oder "Aerosil 816 (hydrophob)" (Firma Degussa) vereinigt. Die getrocknete Mischung wird mittels HVOF-Verfahren (High Velocity Oxy-Fuel) zu einer Beschichtung verarbeitet, sodass ein mehrschichtiges, poriges Relief entsteht. Das Relief wird durch Überstreichen mit herkömmlichen Antifoulingfarben auf Basis von beispielsweise Acrylat-Rosin-Kollophonium oder thermoreversiblen Gelen getränkt.

### 3. Komposite polymere Matrix mit Self-polishing-Effekt B:

0,15 Anteile hydrogeniertes Rosin werden in 2 Anteilen Xylol unter Rühren gelöst und mit 2 Anteilen 20 µm Cellulosepulver (Firma Aldrich), das Poren zwischen 20 nm und 150 nm aufweist, vermischt. Alternativ zum Cellulosepulver kann eine andere retikulare oder porige Perle (beispielsweise "Toyopearl HW-75F" (Firma Tosoh Haas), "Toyopearl HW 70 EC" (Firma Tosoh Haas), "Amberlite 75" (Röhm Haas) als porenformende Komponente verwendet werden. Diese Paste wird mit einer bei Antifouling üblichen Acrylat-Rosin-Kollophoninum "Selfpolishing-Matrix" zu 10 bis 50 Anteilen vermengt und entsprechend auf eine vorbereitete Oberfläche aufgerackelt. Alternativ können auch handelsübliche Farben mit der Paste vereinigt werden, um deren Antifouling-Eigenschaften zu verbessern.

### 4. Komposite polymere Matrix mit Self-polishing-Effekt und enzymatischer Aktivität:

Die unter Punkt 3 beschriebenen Mischungen werden durch die Zugabe von Cellulose- oder Polyethylenglykol (PEG)-gebundenen Enzymen (beispielsweise "PEG-Trypsin" (Firma SIGMA)) zu der Paste enzymatisch aktiv.

### 5. Komposite polymere Matrix mit Self-polishing-Effekt und schleimiger Oberfläche:

Die unter Punkt 3 beschriebenen Mischungen erhalten durch die Zugabe von Polysachariden (beispielsweise Polygalakturonsäure, ein Pektin-Derivat) zu der Paste eine schleimige, quellbare Porenfüllung. Das Additiv wird hergestellt, indem 10-15 Anteile Polysacharide in 10-15 Anteilen Wasser heiß gelöst werden und mit 10-15 Anteilen der porenformenden Pulver unter Punkt 3 vermengt werden. Die Mischung wird zum Pulver getrocknet und über ein geeignetes, organisches Netzmittel (beispielsweise Xylol) - wie unter Punkt 3 beschrieben - in das Bindemittel eingerührt.

### Bezugszeichenliste

- **AF**: Antifouling-Beschichtung
- **PL**: Reinigungsfilm
- **BP**: klebriges Biopolymer
- **CS**: duales Kompositsystem
- **FC**: Fixationskomponente
- **FP**: Antifouling-Partikel
- **LS**: laminare Strömung
- **PP**: Stegpunkt
- **PO**: Pore
- **PW**: Porensteg
- **NR**: nanoskaliges Relief
- **PC**: Reinigungskomponente
- **PFI**: porenfüllende Komponente
- **PFO**: porenformende Komponente
- **SMA**: Unterwasserfläche
- **TS**: turbulente Strömung

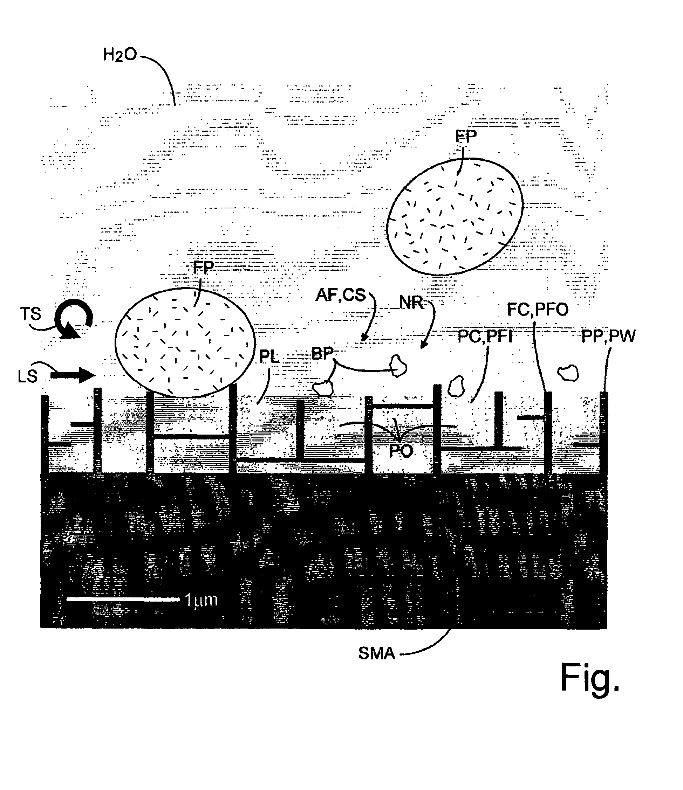

## Patentansprüche

1. Biozidfreie Antifouling-Beschichtung mit umweltneutralen Selbstreinigungs- und hydrodynamischen Oberflächeneigenschaften für umströmte Unterwasserflächen im Zweiphasensystem Festkörper-Wasser zur Vermeidung von Ablagerungen organischer Foulingstoffe mit einer Reinigungskomponente und einer zugehörigen Fixationskomponente, deren Parameterwerte in Abhängigkeit von den auftretenden Foulingstoffen und Umströmungsverhältnissen vorgegeben sind,
**dadurch gekennzeichnet, dass**
die Antifouling-Beschichtung (AF) aus zwei in voneinander getrennten Arbeitsschritten aufzubringenden Komponenten, zunächst die Fixierkomponente, dann die Renigungskomponente, aufgbracht ist, bei dem die Fixationskomponente (FC) eine gute Anbindungsfähigkeit an die Unterwasserfläche (SMA) aufweist und als porenformende Komponente (PFO) in Form eines nanoskaligen, unregelmäßigen Reliefs (NR) sich überlappender Poren (PO) mit einer Porengröße zwischen 0,1 µm² und 0,45 µm², wobei ein sehr hoher Anteil der Poren eine Porengröße von 0,2 µm² aufweist, und die abtragbare Reinigungskomponente (PC) als randvoll porenfüllende Komponente (PFI) in Form eines hydrodynamisch glatten Reinigungsfilms (PL) ausgebildet ist, wobei dieser unregelmäßig von einzelnen Porenstegen (PW) punktförmig mit einer gegen Null gehenden Tiefe durchstoßen wird.

2. Antifouling-Beschichtung nach Anspruch 1 oder 2,
**dadurch gekennzeichnet, dass**
die Porendichte einen relativen Oberflächenanteil der Poren (PO) zwischen 20 % und 90 % ausmacht.

3. Antifouling-Beschichtung nach einem der Ansprüche 1 bis 3,
**dadurch gekennzeichnet, dass**
die Porenstege (PW) den flächigen Reinigungsfilm (PL) mit einer Höhe im Bereich von 10 nm bis 20 nm punktförmig durchstoßen.

4. Antifouling-Beschichtung nach einem der Ansprüche 1 bis 4,
**dadurch gekennzeichnet, dass**
die porenformende Komponente (PFO) hydrophil ist, wobei insbesondere der Grad der Hydrophilie an die Eigenschaften der Unterwasserfläche (SMA) angepasst ist.

5. Antifouling-Beschichtung nach einem der Ansprüche 1 bis 5,
**dadurch gekennzeichnet, dass**
die porenformende Komponente (PFO) einen selbstabschleifenden Binder aufweist.

6. Antifouling-Beschichtung nach Anspruch 6,
**dadurch gekennzeichnet, dass**
der selbstabschleifende Binder aus einem Harz ohne toxische lösliche Antifouling-Substanzen besteht.

7. Antifouling-Beschichtung nach einem der Ansprüche 1 bis 7,
**dadurch gekennzeichnet, dass**
die porenformende Komponente (PFO) aus demselben Material wie die reinzuhaltende Unterwasserfläche (SMA) besteht.

8. Antifouling-Beschichtung nach einem der Ansprüche 1 bis 8,
**dadurch gekennzeichnet, dass**
die Poren (PO) in der porenformenden Komponente (PFO) durch Materialumformung oder -abtrag geformt sind.

9. Antifouling-Beschichtung nach einem der Ansprüche 1 bis 8,
**dadurch gekennzeichnet, dass**
die porenformende Komponente (PFO) in Form von nanofeinen Kunststofffasem durch Elektro-Coating auf die Unterwasserfläche (SMA) aufgelagert wird.

10. Antifouling-Beschichtung nach einem der Ansprüche 1 bis 10,
**dadurch gekennzeichnet, dass**
die porenfüllende Komponente (PFI) als löslicher Gelbildner ausgebildet ist.

11. Antifouling-Beschichtung nach einem der Ansprüche 1 bis 10,
**dadurch gekennzeichnet, dass**
die porenfüllende Komponente (PFI) hydrophobe Eigenschaften aufweist, wobei insbesondere der Grad der Hydrophobie an den zu erwartenden Ablagerungsgrad durch die Foulingstoffe (BP, FP) angepasst ist.

12. Antifouling-Beschichtung nach Anspruch 12,
**dadurch gekennzeichnet, dass**
die porenfüllende Komponente (PFI) als Polymerlösung ausgebildet ist.

13. Antifouling-Beschichtung nach Anspruch 12,
**dadurch gekennzeichnet, dass**
die porenfüllende Komponente (PFI) als Partikel-Suspension oder -Emulsion ausgebildet ist.

14. Antifouling-Beschichtung nach Anspruch 14,
**dadurch gekennzeichnet, dass**
die Partikel-Suspension oder -Emulsion auf der Basis von Silika, dessen Hydrophilie und Hydrophobie durch einen Gehalt an Aluminium variiert werden kann, ausgebildet ist.

## Claims

1. A biocide-free anifouling coating with environmentally neutral self-cleaning and hydrodynamic surface properties for underwater surfaces around which flow circulates in a two-phase solid-water system to prevent deposits of organic fouling substances with a cleaning component and a respective fixative component, whose parameter values are predefined as a function of the fouling substances that occur and the flow circulation conditions,
**characterized in that**
the antifouling (AF) coating comprised of two components is be applied in separate operating steps, namely first the fixative component and then the cleaning component, wherein the fixative component (FC) has a good ability to bind to the underwater surface (SMA) and as the pore-forming component (PFO) it has overlapping pores (PO) with a pore size between 0.1 µm² and 0.45 µm² in the form of an irregular nanoscale relief (NR), wherein a very large percentage of the pores have a pore size of 0.2 µm² and the removable cleaning component (PC) is formulated as a pore-filling component (PFI) up to the edge in the form of a hydrodynamically smooth cleaning film (PL), wherein this film is punctured irregularly by individual pore webs (PW) in spots with a depth approaching zero.

2. The antifouling coating according to Claim 1 or 2,
**characterized in that**
the pore density constitutes a relative surface amount of pores (PO) between 20% and 90%.

3. The antifouling coating according to any one of Claims 1 through 3,
**characterized in that**
the pore webs (PW) puncture through the flat cleaning film (PL) in spots with a height in the range of 10 nm to 20 nm.

4. The antifouling coating according to any one of Claims 1 through 4,
**characterized in that**
the pore-forming component (PFO) is hydrophilic, wherein the degree of hydrophilicity is adapted in particular to the properties of the underwater surface (SMA).

5. The antifoulding coating according to any one of Claims 1 through 5,
**characterized in that**
the pore-forming component has a self-abrasive binder.

6. The antifouling coating according to Claim 6,
**characterized in that**
the self-abrasive binder consists of a resin without toxic soluble antifouling substances.

7. The antifouling coating according to any one of Claims 1 through 7,
**characterized in that**
the pore-forming coating (PFO) consists of the same material as the underwater surface (SMA) that is to be kept clean.

8. The antifouling coating according to any one of Claims 1 through 8,
**characterized in that**
the pores (PO) in the pore-forming component (PFO) are formed by removal or reshaping of material.

9. The antifouling coating according to any one of Claims 1 through 8,
**characterized in that**
the pore-forming component (PFO) is applied by electrocoatng to the underwater surface (SMA) in the form of nanofine plastic fibers.

10. The antifouling coating according to any one of Claims 1 through 10,
**characterized in that**
the pore-filling component (PFI) is formulated as a soluble gel-forming agent.

11. The antifouling coating according to any one of Claims 1 through 10,
**characterized in that**
the pore-filling component (PFI) has hydrophobic properties, wherein the degree of hydrophobicity in particular is adapted to the expected degree of deposition due to the fouling substances (BP, FP).

12. The antifouling coating according Claim 12,
**characterized in that**
the pore-filling component (PFI) is formulated as a polymer solution.

13. The antifouling coating according to Claim 12,
**characterized in that**
the pore-filling component (PFI) is formulated as a particle suspension or emulsion.

14. The antifouling coating according to Claim 14,
**characterized in that**
the particle suspension or emulsion is formulated on the basis of silica, whose hydrophilic and hydrophobic properties can be varied through the aluminum content.

## Revendications

1. Revêtement anti-salissure exempt de biocide, avec des propriétés superficielles autonettoyantes et hydrodynamiques écologiquement neutres pour des surfaces submersibles entourées d'un courant, dans le système à deux phases corps solide/eau, pour éviter des dépôts de matières organiques salissantes, avec une composante de nettoyage et une composante de fixation correspondante, dont les valeurs de paramètre sont prédéfinies en fonction des substances salissantes produites et des comportements de courant de circulation,
**caractérisé en ce que**
le revêtement anti-salissure (AF) est appliqué en deux composants applicables dans des étapes de travail séparées, d'abord le composant fixant, ensuite le composant nettoyant, dans lequel le composant fixant (FC) fait preuve d'une bonne capacité de liaison sur la surface submersible (SMA) et se présente sous la forme d'un composant formant des pores (PFO) sous forme d'un relief nanoscalaire irrégulier (NR) de pores (PO) qui se chevauchent, avec une grosseur de pore comprise entre 0,1 µm² et 0,45 µm², une très grande partie des portes présentant une grosseur de pore de 0,2 µm², et le composant nettoyant enlevable (PC) étant conçu en tant que composant bouche-pore bien tassé (PFI) sous la forme d'un film nettoyant hydrodynamique lisse (PL), ce dernier étant traversé de façon irrégulière sous forme ponctuelle par des cloisonnements poreux individuels (PW) avec une profondeur se rapprochant de zéro.

2. Revêtement anti-salissure selon la revendication 1 ou 2,
**caractérisé en ce que**
la densité des pores correspond à une part superficielle relative des pores (PO) comprise entre 20 % et 90 %.

3. Revêtement anti-salissure selon l'une quelconque des revendications 1 à 3,
**caractérisé en ce que**
les cloisonnements poreux (PW) traversent le film nettoyant à grande surface (PL) avec une hauteur de l'ordre de 10 nm à 20 nm.

4. Revêtement anti-salissure selon l'une quelconque des revendications 1 à 4,
**caractérisé en ce que**
le composant formant des pores (PFO) est hydrophile, notamment le degré d'hydrophilie étant adapté aux propriétés de la surface submersible (SMA).

5. Revêtement anti-salissure selon l'une quelconque des revendications 1 à 5,
**caractérisé en ce que**
le composant formant des pores (PFO) comportant un agent liant auto-abrasif.

6. Revêtement anti-salissure selon la revendication 6,
**caractérisé en ce que**
l'agent liant auto-abrasif consiste dans une résine sans substances anti-salissure toxiques solubles.

7. Revêtement anti-salissure selon l'une quelconque des revendications 1 à 7,
**caractérisé en ce que**
le composant formant des portes (PFO) consiste dans la même matière que la surface submersible (SMA) qui doit être maintenue propre.

8. Revêtement anti-salissure selon l'une quelconque des revendications 1 à 8,
**caractérisé en ce que**
les pores (PO) sont formés dans le composant formant des pores (PFO) par déformation ou enlèvement de matière.

9. Revêtement anti-salissure selon l'une quelconque des revendications 1 à 8,
**caractérisé en ce que**
on applique le composant formant des pores (PFO) sous la forme de fibres de matière plastique nanofines par électro-enduction sur la surface submersible (SMA).

10. Revêtement anti-salissure selon l'une quelconque des revendications 1 à 10,
**caractérisé en ce que**
le composant formant des pores (PFI) est conçu sous la forme d'agent gélifiant soluble.

11. Revêtement anti-salissure selon l'une quelconque des revendications 1 à 10,
**caractérisé en ce que**
le composant formant des pores (PFI) a des propriétés hydrophobes, alors que notamment le degré d'hydrophobie est adapté au taux de dépôt attendu des matières salissantes (BP, FP).

12. Revêtement anti-salissure selon la revendication 12,
**caractérisé en ce que**
le composant formant des pores (PFI) est conçu sous la forme d'une solution polymère.

13. Revêtement anti-salissure selon la revendication 12,
**caractérisé en ce que**
le composant formant des pores (PFI) est conçu sous la forme d'une suspension ou d'une émulsion de particules.

14. Revêtement anti-salissure selon la revendication 14,
**caractérisé en ce que**
la suspension ou émulsion de particule est conçue sur base de silice, dont le caractère hydrophile et hydrophobe peut être varié par la teneur en aluminium.
